**Europäisches Patentamt**

**European Patent Office**

**Office européen des brevets**

(19)

(11) Veröffentlichungsnummer : **0 187 906**
**B1**

# EUROPÄISCHE PATENTSCHRIFT

(12)

(45) Veröffentlichungstag der Patentschrift :
25.05.88

(21) Anmeldenummer : 85113659.8

(22) Anmeldetag : 26.10.85

(51) Int. Cl.⁴ : **B 60 H   1/00**

(54) **Vorrichtung zur Beheizung von Fahrgasträumen od.dgl., insbesondere in Omnibussen.**

(30) Priorität : 17.01.85 DE 3501451

(43) Veröffentlichungstag der Anmeldung :
23.07.86 Patentblatt 86/30

(45) Bekanntmachung des Hinweises auf die Patenterteilung : 25.05.88 Patentblatt 88/21

(84) Benannte Vertragsstaaten :
BE FR GB IT NL SE

(56) Entgegenhaltungen :
EP-A- 0 136 674
DE-B- 2 004 185
US-A- 4 242 950

(73) Patentinhaber : AURORA Konrad G. Schulz GmbH &
Co
Südring 4
D-6933 Mudau/Odenwald (DE)

(72) Erfinder : Schulz, Joachim
Südring 4
D-6933 Mudau/Odenwald (DE)

(74) Vertreter : Patentanwälte Dipl.-Ing. Spianemann Dipl.-Chem. Dr. B. Reitzner
Tal 13
D-8000 München 2 (DE)

EP 0 187 906 B1

## Beschreibung

Die Erfindung betrifft eine Vorrichtung zur Beheizung von Fahrgasträumen od. dgl., insbesondere in Omnibussen, der im Oberbegriff von Anspruch 1 angegebenen Art.

Bei einer derartigen Vorrichtung ist es bekannt, daß das Gehäuse im Bereich des Antriebsmotors Lufteintrittsöffnungen aufweist, ein Flügelrad axial durchströmt wird, parallel zu der Rotationsebene des Flügelrades die Einlaßseite des Wärmetauschers angeordnet ist und die Stirnseite des Gehäuses Luftaustrittsöffnungen aufweist. Abgesehen davon, daß Axialgebläse einen relativ geringen Wirkungsgrad haben und deshalb die Flügelräder entsprechend größer dimensioniert werden müssen, ergeben sich an der Einlaßseite des Wärmetauschers tote Ecken, in denen keine gleichmäßige Beaufschlagung gewährleistet ist und der Luftstrom stark verwirbelt. Die Zufließgeschwindigkeit an den Lufteintrittsöffnungen ist ziemlich hoch, so daß sich die bekannte Vorrichtung beispielsweise nicht zur Anordnung im Bodenbereich eines Fahrgastraums eines Omnibusses eignet, da zuviel Staub und Abfälle angesaugt würden. Das führt zu vorzeitigem Verschmutzen des Gebläses sowie des Wärmetauschers. Außerdem besteht die Gefahr eines strömungsseitigen Kurzschlusses zwischen den Lufteintritts- und -austrittsöffnungen des Gehäuses, was zu einer Überhitzung und Schäden an der Vorrichtung führen kann.

Demgegenüber ist es Aufgabe der vorliegenden Erfindung, die bekannte Vorrichtung derart auszubilden, daß bei einer kompakteren Bauweise und geringeren Geräuschbelastung eine höhere Luftleistung erzielt wird.

Zur Lösung dieser Aufgabe werden erfindungsgemäß die kennzeichnenden Merkmale von Anspruch 1 vorgeschlagen.

Hierdurch wird eine kompakte Vorrichtung geschaffen, die beispielsweise unmittelbar in einen Kanal eingebaut werden kann, der im Bodenbereich an den Wänden des Fahrgastraums eines Omnibusses verläuft. Das Gehäuse der Vorrichtung kann vollständig in den Kanal-Verlauf integriert werden, wobei Umluft durch die Lufteintrittsöffnungen angesaugt wird, die nach dem Hindurchtreten durch den Wärmetauscher in axialer Richtung in den Kanal geblasen wird. Die Zufließgeschwindigkeit an den Lufteintrittsöffnungen ist geringer als bei Vorrichtungen mit Axialgebläsen. Die Lufteintrittsöffnungen können relativ groß ausgelegt sein und haben einen Abstand von dem Boden des Fahrgastraums, da das Radialgebläse oberhalb des Raums liegt, in dem die Umlenkung des Luftstroms erfolgt, so daß auch aus diesem Grunde nicht die Gefahr besteht, daß Staub und Abfälle vom Boden angesaugt werden, so daß das Gebläse und der Wärmetauscher nicht verschmutzen. Das an sich rechteckige Strömungsprofil des aus der Mündung des Gebläses austretenden Luftstroms wird durch das bzw. die Luft-Leitorgane derart verwunden, daß der Luftstrom weitgehend verlustfrei die Einlaßseite des Wärmetauschers in ganzer Fläche gleichmäßig beaufschlagt. Dabei erfolgt das Verwinden des Luftstroms trotz der starken Umlenkung derart gleichmäßig, daß auch keine zusätzlichen Geräusche auftreten, die Vorrichtung also relativ geräuscharm arbeitet. Verwirbelungen des Luftstroms, insbesondere die Bildung von Sekundärwirbeln, werden durch die Verwendung mehrerer Luft-Leitorgane vermieden.

Dadurch, daß sich der Wärmetauscher — in der Achsrichtung des Gebläses betrachtet — an dieses anschließt, ist die Vorrichtung kompakt und hat insbesondere einen geringen Querschnitt. Der gesamte Querschnitt der Vorrichtung kann dem der Luftaustrittsöffnung und gegebenenfalls dem des anschließenden Kanals entsprechen. Das ist insbesondere dann vorteilhaft, wenn die Vorrichtung als Doppelsystem ausgelegt ist und an beiden Stirnseiten Luft in anschließende Kanalabschnitte blasen kann. Hierzu sind zwei koaxiale Gebläse vorgesehen, die von einem einzigen, zentral angeordneten Elektromotor angetrieben werden. Die Luftleitorgane sind symmetrisch nach außen gerichtet und an der freien Stirnseite jedes Gebläses ist jeweils ein Wärmetauscher angeordnet.

Weitere vorteilhafte Ausgestaltungen der Erfindung sind in den übrigen Unteransprüchen unter Schutz gestellt.

In der Zeichnung sind Ausführungsbeispiele der Erfindung wiedergegeben, die anhand der nachfolgenden Beschreibung näher erläutert werden. Es zeigt :

Fig. 1 ein Einbaubeispiel der Vorrichtung in Form eines Doppelsystems in Seitenansicht, teilweise im Schnitt,

Fig. 2 einen Schnitt gemäß Linie II-II in Fig. 1,

Fig. 3 eine Draufsicht der Vorrichtung gemäß Fig. 1,

Fig. 4 ein weiteres Ausführungsbeispiel der Vorrichtung in Seitenansicht, teilweise im Schnitt,

Fig. 5 einen Schnitt gemäß Linie V-V in Fig. 4 und

Fig. 6 ein weiteres Ausführungsbeispiel der Vorrichtung in Seitenansicht, stark schematisiert.

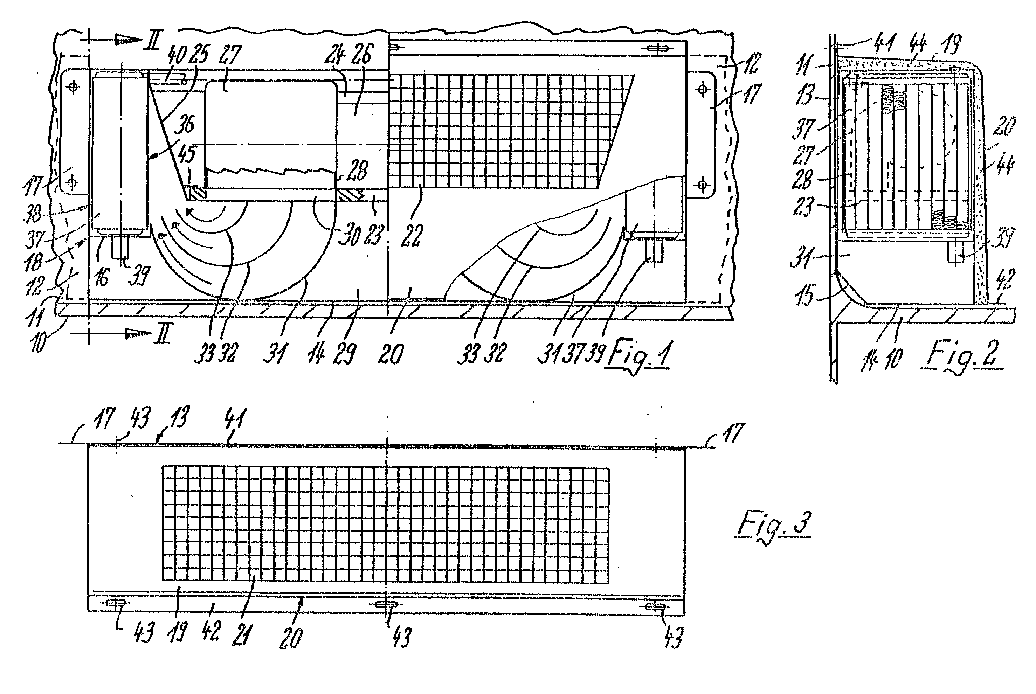

In Fig. 1 und 2 sind ein Boden 10 und eine Seitenwand 11 des Fahrgastraums eines Omnibusses angedeutet, wobei sich entlang der Seitenwand 11 unmittelbar oberhalb des Bodens 10 ein Kanal 12 erstreckt. Der Kanal 12 dient zur gleichmäßigen Verteilung von erwärmter Umluft, wozu der Kanal 12 mit nicht dargestellten Luftaustrittsschlitzen versehen ist.

Bei dem in Fig. 1 bis 3 dargestellten Ausführungsbeispiel ist die Vorrichtung als Doppelsystem ausgebildet und weist ein zweiteiliges Gehäuse auf. Ein Basisteil umfaßt eine Rückwand 13 und einen Boden 14. Zwischen der Rückwand 13 und dem Boden 14 ist vorzugsweise ein schräger Wandteil 15 angeordnet, der Rundungen, Versteifungen od. dgl. in der Ecke zwischen dem Boden 10 des Fahrgastraums und der Seitenwand 11 überbrücken soll. Die Rückwand 13 trägt Halterungen 16 für einen Wärmetauscher und Laschen 17, die Bohrungen zur Befestigung des Basisteils an der Seitenwand 11 aufweisen. Außerdem ist der Basisteil an seinen Stirnseiten jeweils mit einer Luftaustrittsöffnung 18 versehen, die nicht dargestellte Anschlußelemente bzw. Übergangsstücke zu dem Luftkanal 12 aufweist.

Dem Basisteil ist ein Deckelteil zugeordnet, der aus einer Deckfläche 19 und einer Seitenfläche 20 gebildet ist. Die Deckfläche 19 ist mit einer zentralen Lufteintrittsöffnung 21 versehen, und die Seitenfläche 20 weist eine entsprechende Lufteintrittsöffnung 22 auf, die jedoch — wie aus Fig. 1 ersichtlich — unter Abstand von dem Boden 10 des Fahrgastraums angeordnet ist.

Innerhalb des Gehäuses ist ein Zwischenboden 23 vorgesehen, der sich über die gesamte Breite des Gehäuses erstreckt und gegenüber der Rückwand 13 und der Seitenfläche 20 abgedichtet ist. Der Zwischenboden 23 bildet so zusammen mit der Rückwand 13, der Deckfläche 19 und der Seitenfläche 20 einen Saugraum 24, der an seinen Stirnenden durch Trennwände 25 abgeschlossen ist, die unter Abstand von den Luftaustrittsöffnungen 18 angeordnet sind und unter einem bestimmten Winkel zu diesen verlaufen. Innerhalb des Saugraums 24 befindet sich etwa im Zentrum ein Elektromotor 26, der zwei Querstromgebläse 27 treibt. Jedes Querstromgebläse 27 hat einen Druckstutzen 28, der bis zu dem Zwischenboden 23 geführt und gegenüber diesem abgedichtet ist. Innerhalb des Zwischenbodens 23 hat jeder Druckstutzen 28 eine rechteckige Mündung 30, die bei dem dargestellten Ausführungsbeispiel in Richtung des Bodens 10 des Fahrgastraums weist. Die Lufteintrittsöffnung 22 ist derart bemessen und angeordnet, daß sie — wie sich aus Fig. 1 ergibt — unmittelbar oberhalb des zwischenbodens 23 beginnt und sich höchstens bis zu den schrägen Trennwänden 25 erstreckt. Dadurch ist sichergestellt, daß die Umluft ausschließlich den Saugraum 24 beaufschlagt.

Unterhalb des Zwischenbodens 23 befindet sich ein Raum 29, zur Aufnahme von Luft-Leitorganen 31, 32 und 33. Die parallelen Längsseiten der rechteckigen Mündung 30 verlaufen parallel zu der Achse des Gebläses 27, während die Stirnränder der flachen Luft-Leitorgane 31, 32, 33 parallel zu den Schmalseiten der rechteckigen Mündung 30 verlaufen. Bei dem in Fig. 1 dargestellten Ausführungsbeispiel sind die Luft-Leitorgane 31, 32, 33 nach Art von Spirallinien gekrümmt und erstrecken sich über einen Winkel von etwa 170°. Die Luftströme sind durch Pfeile angedeutet.

Ein Wärmetauscher 37 ist an der freien Stirnseite des Gebläses 27 angeordnet, wobei die Einlaßseite 36 des Wärmetauschers 37 zur Achse des Gebläses 27 unter einem rechten Winkel ausgerichtet ist.

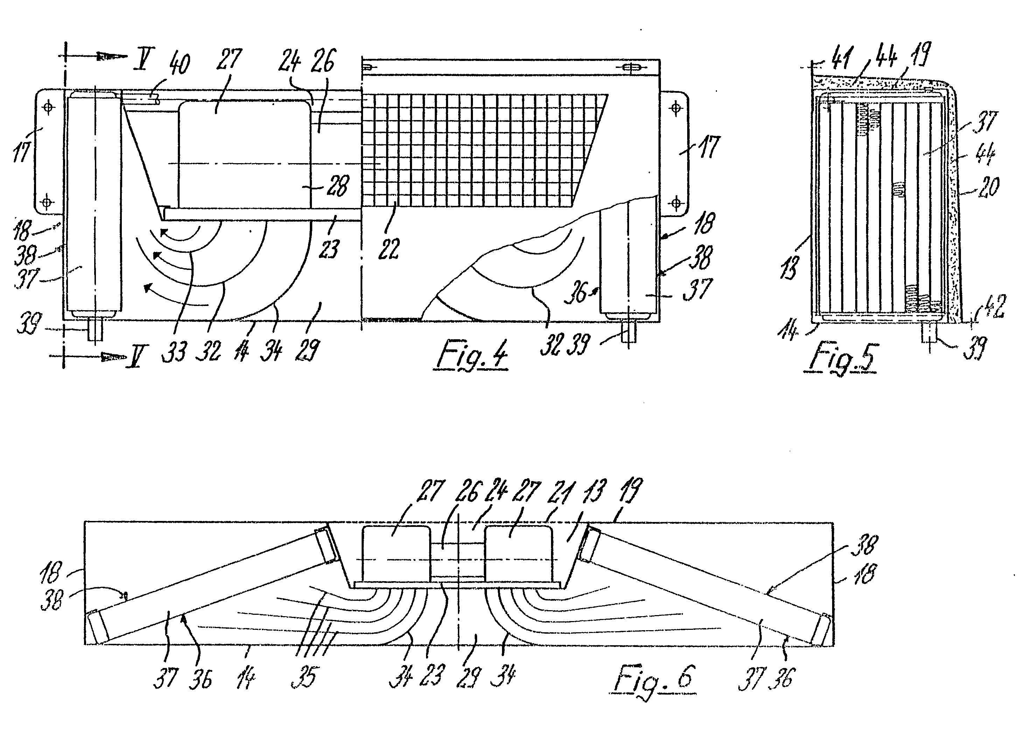

Bei dem Ausführungsbeispiel gemäß Fig. 6 sind zwei Wärmetauscher 37 jeweils unter einem stumpfen Winkel von etwa 160° zur Achse des Doppelgebläses 27 angeordnet. Ein Luft-Leitorgan 34 ist lediglich bis an den Boden 14 herangeführt, während weitere Luft-Leitorgane 35 gemäß Fig. 6 ausgebildet und angeordnet sind. Die so gebildeten Kanäle verjüngen sich zunächst düsenartig und erweitern sich anschließend, um eine möglichst energiereiche Abströmung zu erreichen, die sich dann an den Einlaßseiten 36 der Wärmetauscher 37 einstellt. Die vergrößerten Wärmetauscher 37 gemäß Fig. 6 liefern eine höhere Wärmeleistung. Auch bei diesem Ausführungsbeispiel werden die Wärmetauscher 37 in ganzer Breite und Höhe von einem flachrechteckigen Strömungsprofil unter einem spitzen Winkel angeströmt.

Die Luft-Leitorgane 31 bis 35 bestehen zweckmäßigerweise aus dünnem Stahlblech und können als Einheit gesondert gefertigt und in das Gehäuse eingesetzt werden. Sie sind zweckmäßigerweise an dem Zwischenboden 23 befestigt. Die Einheit kann auch aus Kunststoff hergestellt sein, wobei die weitere Möglichkeit besteht, die Luft-Leitorgane aerodynamisch zu gestalten.

Bei dem Ausführungsbeispiel gemäß Fig. 1 bis 3 erfolgt hinter der Mündung 30 bereits eine Beschleunigung und wird die Umlenkung dadurch eingeleitet bzw. begünstigt, daß der schräge Wandteil 15 — in Strömungsrichtung betrachtet — die einzelnen Kanäle zunehmend verengt, wenn gemäß Fig. 1 die Strömung zunächst in Richtung des Bodens 10 und anschließend wieder nach oben in Richtung der Einlaßseite 36 des Wärmetauschers 37 erfolgt.

Bei dem Ausführungsbeispiel gemäß Fig. 4 und 5 entsprechen die Auslaßseiten 38 der Wärmetauscher 37 genau dem Querschnitt der Luftaustrittsöffnungen 18, so daß bei einer relativ kompakten Vorrichtung eine optimale Wärmeleistung gegeben ist. Auch bei diesem Ausführungsbeispiel ist ein Luft-Leitorgan 34 lediglich bis an den Boden 14 herangeführt. In dem innerhalb des Luft-Leitorgans 34 liegenden Bereich wird die Strömung durch Luft-Leitorgane 32 und 33 umgelenkt.

Bei den Doppelsystemen gemäß Fig. 1 bis 3 bzw. 4, 5 hat jeder Wärmetauscher nur einen wasserseitigen Anschluß 39. Beide Wärmetauscher sind durch eine Leitung 40 in Reihe geschaltet, die sich parallel zur Rückwand 13 erstreckt.

Es besteht jedoch auch die Möglichkeit, den unteren Sammler des Wärmetauschers 37 durch eine Trennwand zu unterteilen, während der obere Sammler durchgehend ausgebildet ist. Die beiden unteren Sammler-Abschnitte sind dann jeweils mit einem Wasserzulauf und einem Wasserablauf versehen.

Bei der Montage der Vorrichtung wird zunächst der Basisteil mit der Rückwand 13 an der Seitenwand 11 des Fahrzeugs befestigt. Anschließend wird der Deckelteil angesetzt, wobei dessen Deckfläche 19 mit einem abgekanteten Flansch 41 und dessen Seitenfläche 20 mit einem abgekanteten Flansch 42 versehen sein kann. Die Flansche 41 und 42 haben zweckmäßigerweise Langlöcher 43 oder sonstige Durchbrechungen zur Befestigung des Deckelteils an der Seitenwand 11 bzw. dem Boden 10. Auf diese Weise wird die Vorrichtung in Stellung gehalten.

Die nach innen weisenden Oberflächen der Deckfläche 19 und der Seitenfläche 20 können mit weichem Schaumstoff 44 beschichtet sein, der zweckmäßigerweise offenporig und selbstverlöschend ist. Er sollte selbstklebend ausgerüstet sein. Die Schaumstoff-Beschichtung 44 hat den Vorteil, daß sie im Bereich der freien Ränder des Zwischenbodens 23, der Trennwände 25 und der Luft-Leitorgane 31 bis 35 eine einwandfreie Abdichtung sicherstellt und gleichzeitig den Saugraum 24 von den Druckräumen trennt.

Der Zwischenboden 23 mit den an diesem angeschlossenen Gebläsen 27 kann als Einschub ausgebildet sein, der in Führungen 45 angeordnet ist, die an den freien Enden der Trennwände 25 vorgesehen sind. Die Trennwände 25 sind dann zweckmäßigerweise mit der Rückwand 13 fest verbunden.

### Patentansprüche

1. Vorrichtung zur Beheizung von Fahrgasträumen od. dgl., insbesondere in Omnibussen, bestehend aus einem Lufteintritts- und -austrittsöffnungen (21, 22 ; 18) aufweisenden und einen Wärmetauscher (37) und ein Gebläse (27) aufnehmenden Gehäuse, wobei die Mündung (30) des Druckstutzens des Gebläses gegenüber der Einlaßseite (36) des diesem nachgeschalteten Wärmetauschers versetzt ist, dadurch gekennzeichnet, daß das Gebläse (27) ein Radialgebläse ist, die Mündung (30) des Druckstutzens (28) des Radialgebläses rechteckig ist, die Längsseiten der rechteckigen Mündung (30) parallel zu der Achse des Gebläses (27) verlaufen, der Wärmetauscher (37) an einer der Stirnseiten des Gebläses (27) und die Einlaßseite (36) des Wärmetauschers (37) zur Achse des Gebläses (27) unter einem Winkel angeordnet sind sowie zwischen dem Druckstutzen (28) und der Einlaßseite (36) des Wärmetauschers (37) mindestens ein Luft-Leitorgan (31 bis 35) vorgesehen ist, das den aus der Mündung austretenden Luftstrom in ein etwa rechteckiges Strömungsprofil ändert, dessen Breite der des Wärmetauschers (37) entspricht und das unter einem spitzen Winkel die Einlaßseite (36) des Wärmetauschers (37) beaufschlagt.

2. Vorrichtung nach Anspruch 1, dadurch gekennzeichnet, daß die Einlaßseite (36) des Wärmetauschers (37) unter einem rechten Winkel zur Achse des Gebläses (27) angeordnet ist.

3. Vorrichtung nach Anspruch 1, dadurch gekennzeichnet, daß die Einlaßseite (36, Fig. 6) des Wärmetauschers (37) unter einem stumpfen Winkel zur Achse des Gebläses (27) angeordnet ist.

4. Vorrichtung nach mindestens einem der Ansprüche 1 bis 3, dadurch gekennzeichnet, daß das Luft-Leitorgan (31) gekrümmt und an die Schmalseite der Mündung (30) des Gebläses (27) angeschlossen ist, die von dem Wärmetauscher (37) abgewandt ist.

5. Vorrichtung nach Anspruch 4, dadurch gekennzeichnet, daß in dem von dem Luft-Leitorgan (31) umschlossenen Bereich weitere Luft-Leitorgane (32, 33) angeordnet sind.

6. Vorrichtung nach mindestens einem der Ansprüche 1 bis 5, dadurch gekennzeichnet, daß die Luft-Leitorgane (31, 32, 33) die gleiche Breite wie der Wärmetauscher (37) aufweisen.

7. Vorrichtung nach mindestens einem der Ansprüche 1 bis 6, dadurch gekennzeichnet, daß die Luft-Leitorgane (31 bis 35) als dünne Wände, insbesondere aus Blech, ausgebildet sind.

8. Vorrichtung nach mindestens einem der Ansprüche 1 bis 7, dadurch gekennzeichnet, daß die Luft-Leitorgane (31, 32, 33) spiralförmig gebogen sind.

9. Vorrichtung nach mindestens einem der Ansprüche 1 bis 8, dadurch gekennzeichnet, daß drei Luft-Leitorgane (31, 32, 33) nebeneinander angeordnet sind und sich düsenartig verjüngende Kanäle bilden und daß der Strömungsquerschnitt — gegebenenfalls bereits innerhalb der Kanäle — erweitert wird.

10. Vorrichtung nach mindestens einem der Ansprüche 1 bis 9, dadurch gekennzeichnet, daß die Mündung (30) des Druckstutzens (28) in einem Zwischenboden (23) ausgebildet ist, dessen Breite der der Luft-Leitorgane (31, 32, 33) angepaßt ist.

11. Vorrichtung nach mindestens einem der Ansprüche 1 bis 10, dadurch gekennzeichnet, daß ein durch den Zwischenboden (23) und geneigte Trennwände (25) von dem übrigen Innenraum des Gehäuses abgetrennter Saugraum (24) zur Aufnahme des Antriebsmotors (26) und des Gebläses (27) Lufteintrittsöffnungen (21, 22) aufweist, die innerhalb des Saugraums (24) mit Filtermaterial belegt sind.

12. Vorrichtung nach mindestens einem der Ansprüche 1 bis 11, dadurch gekennzeichnet, daß zwei koaxiale Gebläse (27) von einem einzigen zentral angeordneten Motor (26) angetrieben sind, die Luft-Leitorgane (31 bis 35) symmetrisch nach außen gerichtet sind, an der freien Stirnseite jedes Gebläses (27) jeweils ein Wärmetauscher (37) angeordnet ist und die Eintrittsöffnungen (21, 22) für Umluft im Bereich des Antriebsmotors (26) vorgesehen sind.

13. Vorrichtung nach mindestens einem der Ansprüche 1 bis 12, dadurch gekennzeichnet, daß jede Auslaßseite (38) des oder der Wärmetauscher (37) in der Luftaustrittsöffnung (18) des Gehäuses angeordnet ist, an die ein sich entlang einer Wand (11) des Fahrzeugs erstreckender und mit Luftaustrittsschlitzen versehener Kanal (12), eine Luftaustrittsdüse, ein Luftaustrittsgrill od. dgl. angeschlossen ist.

### Claims

1. An apparatus for heating passenger compartments or the like, in particular in omnibusses, comprising a housing having air-inlet and air-outlet apertures (21, 22 ; 18) and accommodating a heat exchanger (37) and a blower (27), wherein the mouth (30) of the pressure connection of the blower is offset relative to the intake side (36) of the heat exchanger situated downstream thereof, characterised in that the blower (27) is a radial blower, the mouth (30) of the pressure connection (28) of the radial blower is rectangular, the longitudinal sides of the rectangular mouth (30) extend parallel to the axis of the blower (27), the heat exchanger is disposed at one end of the blower (27) and the intake side (36) of the heat exchanger (37) is arranged at an angle to the axis of the blower (27), while between the pressure connection (28) and the intake side (36) of the heat exchanger (37) at least one air-conducting member (31 to 35) is provided which changes the air stream emerging from the mouth into an approximately rectangular stream profile, the width of which corresponds to that of the heat exchanger (37) and which impinges on the intake side (36) of the heat exchanger (37) at an acute angle.

2. An apparatus according to Claim 1, characterised in that the intake side (36) of the heat exchanger (37) is disposed at a right angle to the axis of the blower (27).

3. An apparatus according to Claim 1, characterised in that the intake side (36, Fig. 6) of the heat exchanger (37) is disposed at an obtuse angle to the axis of the blower (27).

4. An apparatus according to any one of Claims 1 to 3, characterised in that the air-conducting member (31) is curved and is connected to the narrow side of the mouth (30) of the blower (27), which is remote from the heat exchanger (37).

5. An apparatus according to Claim 4, characterised in that further air-conducting members (32, 33) are arranged in the area surrounded by the air-conducting member (31).

6. An apparatus according to any one of Claims 1 to 5, characterised in that the air-conducting members (31, 32, 33) have the same width as the heat exchanger (37).

7. An apparatus according to any one of Claims 1 to 6, characterised in that the air-conducting members (31 to 35) are in the form of thin walls, particularly of sheet metal.

8. An apparatus according to any one of Claims 1 to 7, characterised in that the air-conducting members (31, 32, 33) are curved in spiral fashion.

9. An apparatus according to any one of Claims 1 to 8, characterised in that three air-conducting members (31, 32, 33) are arranged side by side to form ducts tapering in the manner of nozzles, and in that the stream cross-section is widened, optionally already inside the ducts.

10. An apparatus according to any one of Claims 1 to 9, characterised in that the mouth (30) of the pressure connection (28) is formed in a false floor (23), the width of which matches that of the air-conducting members (31, 32, 33).

11. An apparatus according to any one of Claims 1 to 10, characterised in that an intake chamber (24), which is separated from the rest of the interior of the housing by the false floor (23) and inclined dividing walls (25) and which accommodates a drive motor (26) and the blower (27), has air-inlet apertures (21, 22) which are covered with filter material inside the intake chamber (24).

12. An apparatus according to any one of Claims 1 to 11, characterised in that two coaxial blowers (27) are driven by a single centrally mounted motor (26), the air-conducting members (31 to 35) are directed symmetrically outwards, a respective heat exchanger (37) is disposed at the free end of each blower (27) and the air-inlet apertures (21, 22) for recirculation of air are provided in the vicinity of the drive motor (26).

13. An apparatus according to any one of Claims 1 to 12, characterised in that each outlet side (38) of the heat exchanger or exchangers (37) is disposed in the air-outlet aperture (18) of the housing, to which is connected a duct (12) which extends along a wall (11) of the vehicle and which is provided with air-outlet slots, an air-outlet nozzle, an air-outlet grille or the like.

**Revendications**

1. Dispositif pour le chauffage des cabines de passagers ou équivalents, en particulier dans des véhicules de transport en commun, composé d'un boîtier présentant des ouvertures d'entrée d'air et de sortie d'air (21, 22 ; 18) et contenant un échangeur de chaleur (37) et un ventilateur (27), la bouche (30) de la tubulure de pression du ventilateur étant décalée par rapport à la face d'admission (36) de l'échangeur de chaleur placé en aval, caractérisé en ce que :

le ventilateur (27) est un ventilateur radial,

la bouche (30) de la tubulure de pression (28) du ventilateur radial est rectangulaire,

les côtés longitudinaux de la bouche rectangulaire (30) s'étendent parallèlement à l'axe du ventilateur (27),

l'échangeur de chaleur (37) est monté au droit de l'une des parois frontales du ventilateur (27) et la face d'admission (36) de l'échangeur de chaleur (37) forme un angle avec l'axe du ventilateur (27),

et il est prévu, entre la tubulure de pression (28) et la face d'admission (36) de l'échangeur de chaleur (37) au moins un organe déflecteur d'air (31 à 35) qui modifie le flux d'air sortant de la bouche pour lui donner un profil d'écoulement à peu près rectangulaire dont la largeur correspond à celle de l'échangeur de chaleur (37) et qui attaque la face d'admission (36) de l'échangeur de chaleur (37) en formant un angle aigu.

2. Dispositif selon la revendication 1, caractérisé en ce que la face d'admission (36) de l'échangeur de chaleur (37) est disposée à angle droit par rapport à l'axe du ventilateur (27).

3. Dispositif selon la revendication 1, caractérisé en ce que la face d'admission (36, figure 6) de l'échangeur de chaleur (37) forme un angle obtu avec l'axe du ventilateur (27).

4. Dispositif selon l'une des revendications 1 à 3, caractérisé en ce que l'organe déflecteur d'air (31) est incurvé et est raccordé au petit côté de la bouche (30) du ventilateur (27) qui est la plus éloignée de l'échangeur de chaleur (37).

5. Dispositif selon la revendication 4, caractérisé en ce que, dans la région enfermée par l'organe déflecteur d'air (31), sont disposés d'autres organes déflecteurs d'air (32, 33).

6. Dispositif selon l'une des revendications 1 à 5, caractérisé en ce que les organes déflecteurs d'air (31, 32, 33) présentent la même largeur que l'échangeur de chaleur (37).

7. Dispositif selon l'une des revendications 1 à 6, caractérisé en ce que les organes déflecteurs d'air (31 à 35) sont constitués par des parois minces, en particulier en tôle.

8. Dispositif selon l'une des revendications 1 à 7, caractérisé en ce que les organes déflecteurs d'air (31, 32, 33) sont cintrés avec un profil en spirale.

9. Dispositif selon l'une des revendications 1 à 8, caractérisé en ce que trois organes déflecteurs d'air (31, 32, 33) sont disposés l'un à côté de l'autre et forment des conduits qui se rétrécissent à la façon de tuyères et en ce que la section d'écoulement s'élargit éventuellement déjà à l'intérieur même des conduits.

10. Dispositif selon l'une des revendications 1 à 9, caractérisé en ce que la bouche (30) de la tubulure de pression (28) est formée dans un plancher intermédiaire (23) dont la largeur est adaptée à celle des organes déflecteurs d'air (31, 32, 33).

11. Dispositif selon l'une des revendications 1 à 10, caractérisé en ce qu'une chambre d'aspiration (24), séparée du reste du volume intérieur du boîtier par le plancher intermédiaire (23) et par des cloisons inclinées (25), et qui est destinée à contenir le moteur d'entraînement (26) et le ventilateur (27), présente des ouvertures d'entrée d'air (21, 22) qui sont couvertes d'une matière filtrante à l'intérieur de la chambre d'aspiration (24).

12. Dispositif selon l'une des revendications 1 à 11, caractérisé en ce que deux ventilateurs coaxiaux (27) sont entraînés par un unique moteur (26) placé en position centrale, les organes déflecteurs d'air (31 à 35) étant dirigés symétriquement vers l'extérieur, un échangeur de chaleur (37) étant agencé au droit de la face frontale libre de chaque ventilateur (27), et les ouvertures d'entrée (21, 22) par où l'air ambiant pénètre étant prévues dans la région du moteur d'entraînement (26).

13. Dispositif selon l'une des revendications 1 à 12, caractérisé en ce que chaque face de sortie (38) du ou des échangeur (s) de chaleur (37) est placée dans l'ouverture de sortie d'air (18) du boîtier, à laquelle se raccorde un conduit (12) qui s'étend le long d'une paroi (11) du véhicule et est muni de fentes de sortie d'air, d'une buse de sortie d'air, d'une grille de sortie d'air ou équivalent.

Fig. 1

Fig. 2

Fig. 3

Fig. 4

Fig. 5

Fig. 6